# EUROPÄISCHE PATENTANMELDUNG

(11) **EP 1 648 186 A1**
(43) Veröffentlichungstag der Anmeldung: **19.04.2006**
(21) Anmeldenummer: 05021163.0
(22) Anmeldetag: 28.09.2005
(51) Int. Cl.: H04Q 7/32

(54) **Teilnehmerkarte mit Nachladefilter und Filterverfahren**

(30) Priorität: 13.10.2004 DE 102004049885
(71) Anmelder: Giesecke & Devrient GmbH, 81677 München (DE)
(72) Erfinder: Schönberner, Rainer, 85604 Zorneding (DE)

(57) **Zusammenfassung**

Die Erfindung schafft eine Teilnehmerkarte für ein Mobilfunksystem, die ein Nachladen von Daten in der Post-Issuance-Phase erlaubt. Die Teilnehmerkarte weist weiter auf: eine Filter-Anwendung, die gemeinsam mit vorbestimmbaren Filterregeln ein Filterprofil bildet, so dass nachgeladene Daten gemäß dem Filterprofil überprüfbar und gemäß dem Überprüfungsergebnis wahlweise akzeptierbar oder abweisbar sind; und eine Nutzer-Schnittstelle, über die ein Nutzer der Teilnehmerkarte zumindest die Filterregeln bearbeiten kann, um ein gewünschtes Filterprofil für das Nachladen von Daten einzustellen. Bei einem Filterverfahren werden die Daten gemäß dem Filterprofil mit den bearbeitbaren Filterregeln gefiltert.

## Beschreibung

Die Erfindung betrifft eine Teilnehmerkarte, mit einem darin implementierten Sicherheitsmodul zur Verwendung bei der Mobiltelefonie mit einem mobilen Endgerät in einem Mobilfunksystem, und genauer eine solche Teilnehmerkarte, die ein Nachladen von Daten in der Post-Issuance-Phase erlaubt, sowie ein Verfahren zum Filtern von Daten.

Mobile Endgeräte - wie z.B. Mobiltelefone, Smart Phones oder PDAs (Personal Digital Assistants) mit Mobiltelefonfunktion - werden üblicherweise mit einer Teilnehmerkarte betrieben, einer spezifisch eingerichteten Mikroprozessorchipkarte. Beispiele für Mobilfunksysteme sind GSM (Global System for Mobile Communications), UMTS (Universal Mobile Telecommunications System), IMT-2000 (International Mobile Communication 2000). Herzstück der Teilnehmerkarte ist das Sicherheitsmodul, das Identitätsdaten enthält, wie beispielsweise die IMSI und den Authentisierungsschlüssel Ki, die für die Teilnehmerkarte und damit indirekt für den Nutzer der Teilnehmerkarte bzw. des damit betriebenen mobilen Endgeräts spezifisch sind. Im GSM-Mobilfunksystem ist das Sicherheitsmodul als SIM (SIM = Subscriber Identity Module) bezeichnet, im UMTS-Mobilfunksystem als USIM (USIM = Universal SIM). Die Teilnehmerkarte wird in diesen Fällen häufig als (U)SIM-Karte bezeichnet. Beim Betrieb eines mobilen Endgeräts mit Teilnehmerkarte in einem Mobilfunknetzwerk werden die Identitätsdaten im Sicherheitsmodul der Teilnehmerkarte dazu verwendet, das mobile Endgerät gegenüber dem Mobilfunknetzwerk oder dem Hintergrundsystem, in dem die Identitätsdaten aller Nutzer gesammelt gespeichert sind, zu authentisieren.

In den meisten Teilnehmerkarten ist zudem ein sogenanntes Card Application Toolkit implementiert, mit dem die Teilnehmerkarte mittels einer Reihe von vorgefertigten Kommandos auf Funktionalitäten des mobilen Endgeräts, mit dem die Teilnehmerkarte betrieben wird, direkt zugreifen kann. Im GSM-Mobilfunksystem ist das Card Application Toolkit beispielsweise als SIM Application Toolkit (SAT) bezeichnet und in der Norm TS 31.111 (vormals auch als GSM 11.14 bezeichnet) genauer beschrieben. Beim UMTS-Mobilfunksystem ist das Card Application Toolkit auch als Universal SAT (USAT) bezeichnet. Die vorgefertigten Kommandos werden auch als proaktive Kommandos bezeichnet.

Die Teilnehmerkarte hat in der Regel einen nichtflüchtigen Systemspeicher (z.B. ROM), einen nichtflüchtigen Anwendungsspeicher (z.B. EEPROM) und einen flüchtigen Arbeitsspeicher (z.B. RAM). Im Systemspeicher sind im Wesentlichen das Betriebssystem und Systemfunktionen abgespeichert. Im Anwendungsspeicher sind im Wesentlichen Anwendungen (gleichbedeutend: Applikationen) abgespeichert.

Eine Teilnehmerkarte wird im Lauf ihres Lebens zuerst initialisiert, anschließend personalisiert und schließlich an den Nutzer herausgegeben. Die Programmiervorgänge zur Initialisierung und Personalisierung der Teilnehmerkarte nimmt der Hersteller oder Herausgeber der Teilnehmerkarte vor. Nach Abschluss der Personalisierung ist die Teilnehmerkarte bereit zur Herausgabe an den Nutzer. Die Lebensphase einer Teilnehmerkarte vor der Herausgabe an den Nutzer wird häufig als Pre-Issuance-Phase bezeichnet. Die Lebensphase einer Teilnehmerkarte nach der Herausgabe an den Nutzer wird dann entsprechend als Post-Issuance-Phase bezeichnet. Neuere Teilnehmerkarten erlauben dem Nutzer ein Nachladen von Daten in die Teilnehmerkarte in der Post-Issuance-Phase. Daten, die nachgeladen werden können, können z.B. Anwendungen sein, Mediendaten wie Bild oder Musik, z.B. insbesondere Klingeltöne, oder Aktualisierungen von bereits in der Teilnehmerkarte vorhandenen Daten.

Das Nachladen von Daten durch den Nutzer birgt die Gefahr, dass mit den Daten unerwünschte Zusatzdaten wie z.B. Viren, Würmer, Trojaner oder dergleichen in die Teilnehmerkarte geladen werden. Zudem kann es erwünscht sein, die Nachlademöglichkeiten für vorbestimmte zusätzliche Mit-Nutzer, beispielsweise Kinder des Nutzers, einzuschränken oder anderweitig zu kontrollieren.

Der Erfindung liegt die Aufgabe zu Grunde, eine Teilnehmerkarte zu schaffen, die ein kontrolliertes Nachladen von Daten in der Post-Issuance-Phase erlaubt. Ein Filterverfahren für Daten soll ebenfalls angegeben werden.

Die Aufgabe wird gelöst durch eine Teilnehmerkarte nach Anspruch 1. Vorteilhafte Ausgestaltungen der Erfindung sind in den abhängigen Ansprüchen angegeben.

Die erfindungsgemäße Teilnehmerkarte gemäß dem unabhängigen Anspruch 1 hat ein beliebiges darin implementiertes Sicherheitsmodul zur Verwendung bei der Mobiltelefonie mit einem mobilen Endgerät in einem Mobilfunksystem, z.B. eine SIM oder USIM. Die Teilnehmerkarte erlaubt weiter ein Nachladen von Daten in der Post-Issuance-Phase durch den Nutzer. Gemäß der Erfindung weist die Teilnehmerkarte weiter auf: eine Filter-Anwendung, die gemeinsam mit vorbestimmbaren Filterregeln ein Filterprofil bildet, so dass nachgeladene Daten gemäß dem Filterprofil überprüfbar und gemäß dem Überprüfungsergebnis wahlweise akzeptierbar oder abweisbar sind; und eine Nutzer-Schnittstelle, über die ein Nutzer der Teilnehmerkarte die Filterregeln bearbeiten kann, um ein gewünschtes Filterprofil für das Nachladen von Daten einzustellen.

Die Nutzer-Schnittstelle erlaubt es dem Nutzer, ein gewünschtes Filterprofil zu erstellen, indem er die Filterregeln bearbeitet. Somit kann der Nutzer mit der Filter-Anwendung und der Nutzer-Schnittstelle kontrollieren, welche Daten in die Teilnehmerkarte gelangen und welche nicht.

Daher ist gemäß Anspruch 1 eine Teilnehmerkarte geschaffen, die ein kontrolliertes Nachladen von Daten in der Post-Issuance-Phase erlaubt.

Wahlweise ist die Filter-Anwendung eine Card Application Toolkit Applikation, z.B. eine SAT-Applikation (SIM Application Toolkit Applikation) oder eine USAT-Applikation (Universal SAT Applikation).

Gemäß einer Weiterbildung der Erfindung enthält die Teilnehmerkarte mindestens zwei gesonderte Sätze von Filterregeln, so dass mindestens zwei Filterprofile eingestellt werden können. Beispielsweise kann ein Nutzer ein erstes Filterprofil mit ersten Filterregeln für sich selbst und evtl. seine(n) Lebensgefährten/in haben, sowie ein zweites Filterprofil mit zweiten Filterregeln für seine Kinder. Das zweite Filterprofil ist vorzugsweise stärker einschränkend und weist beispielsweise Daten ab, die nicht jugendfreie Inhalte umfassen.

Vorzugsweise sind die Filterregeln erst nach einer erfolgreichen Authentisierung des Nutzers gegenüber der Teilnehmerkarte bearbeitbar. Hierdurch wird z.B. verhindert, dass Kinder des Anwenders ihre stärker einschränkenden Filterregeln selbst bearbeiten und erweitern.

Die Daten, die nachgeladen werden sollen, können in beliebiger Form in die Teilnehmerkarte geladen werden, insbesondere als Kurznachricht SMS (Short Messages Service) oder MMS (Multimedia Messaging Service) oder als E-Mail.

Die nachgeladenen Daten können beispielsweise Videodaten, Audiodaten oder Applikationen wie z.B. exe-Dateien oder Java-Applets umfassen.

Bei einem Verfahren zum Filtern von Daten, die in eine Teilnehmerkarte nachgeladen werden sollen, werden die Daten mittels der Filter-Anwendung und unter Berücksichtigung der durch den Anwender bearbeitbaren Filterregeln gefiltert, so dass Daten, die dem Filterprofil genügen, akzeptiert werden, und Daten, die dem Filterprofil nicht genügen, abgewiesen werden.

Wahlweise werden die Daten zumindest teilweise in der Teilnehmerkarte gefiltert. Alternativ oder zusätzlich werden zumindest ein Teil der Filterregeln an ein der Teilnehmerkarte zugeordnetes Hintergrundsystem übermittelt und die Daten zumindest teilweise beim Hintergrundsystem gefiltert. Bei der zweiten Alternative werden Daten beispielsweise bereits beim Hintergrundsystem vorgefiltert (und später bei der Teilnehmerkarte zu Ende gefiltert) oder vollständig gefiltert. Hierdurch werden Daten, die gegen die Filterregeln verstoßen zumindest teilweise gar nicht erst an die Teilnehmerkarte gesandt. Auf diese Weise entfallen für den Nutzer der Teilnehmerkarte unnötige und teure Verbindungskosten.

Im folgenden wird die Erfindung an Hand von Ausführungsbeispielen und unter Bezugnahme auf die Zeichnung näher erläutert, in der zeigt:
- Fig.: 1 schematisch eine Teilnehmerkarte mit einer darin implementierten Filter-Anwendung und zugehörigen bearbeitbaren Filterregeln.

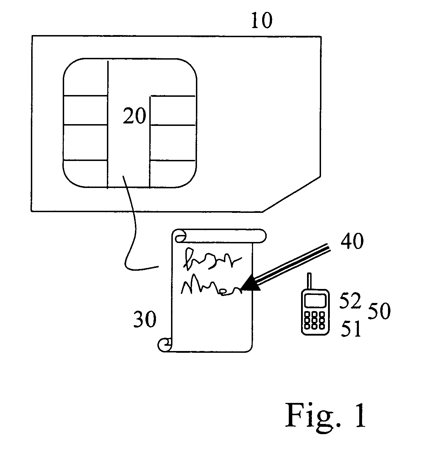

Fig. 1 zeigt in schematischer Darstellung eine Teilnehmerkarte 10 mit einer darin implementierten Filter-Anwendung 20 und zugehörigen bearbeitbaren Filterregeln 30. Die Filterregeln 30 sind über eine Nutzer-Schnittstelle 40 bearbeitbar. Die Nutzer-Schnittstelle 40 umfasst in der Teilnehmerkarte implementierte Einrichtungen - z.B. Teile eines (U)SIM Application Toolkit-(nicht dargestellt). Beispielsweise weist die Nutzer-Schnittstelle 40 eine SIM Application Toolkit Applikation auf, mit der die Filterregeln 30 bearbeitbar sind. Die Teilnehmerkarte 10 ist zum Betrieb in ein Mobiltelefon 50 mit einer Tastatur 51 und einem Display 52 eingerichtet und in das Mobiltelefon 50 eingesetzt (auch wenn in Fig. 1 die Teilnehmerkarte 10 zugunsten der besseren Anschaulichkeit, abweichend, außerhalb des Mobiltelefons 50 dargestellt ist). Die Nutzer-Schnittstelle 40 ist derart an das Mobiltelefon 50 angekoppelt oder ankoppelbar, dass mittels der Tastatur 51 und/oder des Displays 52 des Mobiltelefons 50 die Filterregeln 30 bearbeitet werden können.

## Patentansprüche

1. Teilnehmerkarte (10), mit einem darin implementierten Sicherheitsmodul ((U)SIM) zur Verwendung bei der Mobiltelefonie mit einem mobilen Endgerät (50) in einem Mobilfunksystem, die ein Nachladen von Daten in der Post-Issuance-Phase erlaubt, wobei die Teilnehmerkarte (10) weiter aufweist:
- eine Filter-Anwendung (20), die gemeinsam mit vorbestimmbaren Filterregeln (30) ein Filterprofil bildet, so dass nachgeladene Daten gemäß dem Filterprofil überprüfbar und gemäß dem Überprüfungsergebnis wahlweise akzeptierbar oder abweisbar sind, und
- eine Nutzer-Schnittstelle (40), über die ein Nutzer der Teilnehmerkarte (10) die Filterregeln (30) bearbeiten kann, um ein gewünschtes Filterprofil für das Nachladen von Daten einzustellen.

2. Teilnehmerkarte (10) nach Anspruch 1, wobei die Filter-Anwendung (20) eine Card Application Toolkit Applikation ist, insbesondere eine SIM Application Toolkit Applikation (SAT-Applikation) oder eine USIM Application Toolkit Applikation (USAT-Applikation).

3. Teilnehmerkarte (10) nach Anspruch 1 oder 2, die mindestens zwei gesonderte Sätze von Filterregeln (30) aufweist, so dass mindestens zwei Filterprofile eingestellt werden können.

4. Teilnehmerkarte (10) nach einem der Ansprüche 1 bis 3, wobei die Filterregeln (30) erst nach einer erfolgreichen Authentisierung des Nutzers gegenüber der Teilnehmerkarte (10) bearbeitbar sind.

5. Verfahren zum Filtern von Daten, die in eine Teilnehmerkarte (10) nach einem der Ansprüche 1 bis 4 nachgeladen werden sollen, wobei die Daten mit der Filter-Anwendung (20) unter Berücksichtigung der durch den Anwender bearbeitbaren Filterregeln (30) gefiltert werden, so dass Daten, die dem Filterprofil genügen, akzeptiert werden, und Daten, die dem Filterprofil nicht genügen, abgewiesen werden.

6. Verfahren nach Anspruch 5, wobei die Daten zumindest teilweise in der Teilnehmerkarte (10) gefiltert werden.

7. Verfahren nach Anspruch 5 oder 6, wobei zumindest ein Teil der Filterregeln (30) an ein der Teilnehmerkarte (10) zugeordnetes Hintergrundsystem übermittelt werden und die Daten zumindest teilweise beim Hintergrundsystem gefiltert werden.
